# EUROPEAN PATENT APPLICATION

(11) **EP 4 467 595 A1**
(43) Date of publication of application: **27.11.2024**
(21) Application number: 22922020.7
(22) Date of filing: 26.10.2022
(51) Int. Cl.: C08J 9/00, B32B 5/18, B32B 7/027, B32B 27/18, B32B 27/30

(54) **POROUS MEMBRANE, POROUS MEMBRANE LAMINATE, AND PRODUCTION METHOD FOR POROUS MEMBRANE**

(30) Priority: 20.01.2022 JP 2022007434
(71) Applicant: Sumitomo Electric Fine Polymer, Inc., Sennan-gun, Osaka 590-0458 (JP); SUMITOMO ELECTRIC INDUSTRIES, LTD., Osaka-shi, Osaka 541-0041 (JP)
(72) Inventor: KATAYAMA, Hirokazu, Osaka-shi, Osaka 541-0041 (JP); FUKUNAGA, Atsushi, Osaka-shi, Osaka 541-0041 (JP); HASHIMOTO, Takamasa, Sennan-gun, Osaka 590-0458 (JP); CHINO, Kanako, Sennan-gun, Osaka 590-0458 (JP); TSUJIWAKI, Hiroyuki, Sennan-gun, Osaka 590-0458 (JP)
(74) Representative: Boult Wade Tennant LLP
(86) International application number: PCT/JP2022/039922
(87) International publication number: WO 2023/139868

(57) **Abstract**

A porous membrane according to the present disclosure is mainly composed of polytetrafluoroethylene, wherein a 1st Run melting curve obtained by differential scanning calorimetry at a heating rate of 10°C/minute has an endothermic peak in a range of 300°C to 360°C inclusive, and the difference between the onset temperature and the endset temperature of the endothermic peak is not more than 20°C.

## Description

### TECHNICAL FIELD

The present disclosure relates to a porous membrane, a porous membrane laminate and a method of manufacturing a porous membrane. This application claims priority based on Japanese Patent Application No. 2022-007434 filed on January 20, 2022, and the entire contents of the Japanese patent application are incorporated herein by reference.

### BACKGROUND ART

The porous membrane using polytetrafluoroethylene has characteristics of PTFE such as high heat resistance, chemical stability, weather resistance, flame resistance, high strength, non-adhesiveness, and low friction coefficient, and porous characteristics such as flexibility, dispersing medium permeability, particle-capturing property, and low dielectric constant. Thus, the porous membrane containing PTFE as a main component is widely used as a microfiltration filter for a dispersing medium and a gas in semiconductor-associated fields, liquid crystal related fields, and food and medical related fields. As such a filter, a porous filter using a porous membrane containing PTFE as a main component, which can capture fine particles having a particle size of less than 0.1 µm, has been proposed in recent years (refer to Japanese Unexamined Patent Application Publication No. 2010-94579).

### CITATION LIST

### PATENT LITERATURE

Patent literature 1: Japanese Unexamined Patent Application Publication No. 2010-94579

### SUMMARY OF THE INVENTION

A porous membrane according to an aspect of the present disclosure is a porous membrane containing polytetrafluoroethylene as a main component. A melting curve obtained in a first run of differential scanning calorimetry at a rate of temperature increase of 10°C/min has an endothermic peak in a range of 300°C to 360°C, and a difference between an onset temperature and an endset temperature of the endothermic peak is 20°C or less.

### BRIEF DESCRIPTION OF THE DRAWINGS

FIG. 1 is a schematic and partial cross-sectional view showing a porous membrane according to one embodiment of the present disclosure.
FIG. 2 is a schematic and partial cross-sectional view showing an example of a porous membrane laminate according to one embodiment of the present disclosure.
FIG. 3 is a schematic and partial cross-sectional view showing another example of the porous membrane laminate according to one embodiment of the present disclosure.
FIG. 4 is a schematic and partial cross-sectional view showing another example of the porous membrane laminate according to one embodiment of the present disclosure.
FIG. 5 is a schematic and partial cross-sectional view showing another example of the porous membrane laminate according to one embodiment of the present disclosure.
FIG. 6 is a schematic and partial cross-sectional view showing another example of the porous membrane laminate according to one embodiment of the present disclosure.
FIG. 7 is a schematic and partial cross-sectional view showing another example of the porous membrane laminate according to one embodiment of the present disclosure.
FIG. 8 is a schematic and partial cross-sectional view showing another example of the porous membrane laminate according to one embodiment of the present disclosure.
FIG. 9 is a schematic and partial cross-sectional view showing another example of the porous membrane laminate according to one embodiment of the present disclosure.
FIG. 10 is a schematic and partial cross-sectional view showing another example of the porous membrane laminate according to one embodiment of the present disclosure.
FIG. 11 is a schematic and partial cross-sectional view showing another example of the porous membrane laminate according to one embodiment of the present disclosure.
FIG. 12 is a schematic and partial cross-sectional view showing another example of the porous membrane laminate according to one embodiment of the present disclosure.

### DETAILED DESCRIPTION

### [Problems to be Solved by Present Disclosure]

As the polytetrafluoroethylene used for the porous membrane, it is preferable to use polytetrafluoroethylene having a high molecular weight in order to reduce the diameter of the pores. However, when the molecular weight of polytetrafluoroethylene is increased, the molding pressure at the time of molding a material for forming a porous membrane containing polytetrafluoroethylene as a main component is increased, and it is difficult to perform extrusion molding using a general-purpose apparatus under general-purpose production conditions. In addition, since friction between the material for forming the porous membrane and the extrusion-molding machine is likely to occur, the variation of the pore size of the porous membrane varies, and the accuracy of the filtration treatment may be reduced.

The present disclosure has been made in view of the above circumstances, and an object of the present disclosure is to provide a porous membrane having a small variation in pore size.

### [Advantageous Effects of Present Disclosure]

According to the present disclosure, a porous membrane having a small variation in pore size can be provided.

### [Description of Embodiments of Present Disclosure]

First, embodiments of the present disclosure will be listed and described.
(1) A porous membrane according to an aspect of the present disclosure is a porous membrane containing polytetrafluoroethylene as a main component. A melting curve obtained in a first run of differential scanning calorimetry at a rate of temperature increase of 10°C/min has an endothermic peak in a range of 300°C to 360°C, and a difference between an onset temperature and an endset temperature of the endothermic peak is 20°C or less.

The porous membrane contains polytetrafluoroethylene (hereinafter, also referred to as PTFE) as a main component. The difference between the onset temperature (heat-absorbing start temperature) and the endset temperature (heat-absorbing end temperature) of the endothermic peak in the range of 300°C to 360°C of the melting curve of the first run obtained by differential scanning calorimetry is 20°C or less, whereby the particle size distribution of the PTFE particles is narrow. When the particle size distribution of the PTFE particles is broad, the gaps between the PTFE particles are small, and the liquid lubricant is less likely to permeate. On the other hand, the porous membrane has a narrow particle size distribution of PTFE particle diameters and a large gap between PTFE particles, and thus the liquid lubricant easily permeates the porous membrane. As a result, the extrusion pressure of the material for forming the porous membrane is reduced, and since the variation in pore size becomes small, the accuracy of the filtration treatment of the porous membrane can be improved. The "main component" refers to a component having the highest content in terms of mass, and for example, refers to a component having a content percentage of 90% by mass or more, and preferably 95% by mass or more.

The differential scanning calorimetry is measured by the following method using a differential scanning calorimeter (DSC). The samples 5 mg to 30 mg were heated from room temperature to 380°C at a rate of 10°C/min (pattern 1 (first run)), then cooled from 380°C to 100°C at a rate of -1°C/min (pattern 2), and then heated from 100°C to 380°C at a rate of 10°C/min (pattern 3 (second run)). The heat absorbing amount obtained by integrating the section of 48°C with the endset temperature of the endothermic peak in a range of 300°C to 360°C of the melting curve of pattern 1 as the starting point is defined as the first amount of heat of fusion. In addition, similarly to the first amount of heat of fusion, the heat absorbing amount obtained by integrating the section of 48°C with the endset temperature of the endothermic peak in a range of 300°C to 360°C of the melting curve of pattern 3 as the starting point is defined as the second amount of heat of fusion.

(2) In (1), it is preferable that in the porous membrane, the difference between the onset temperature and the endset temperature of the endothermic peak is 15°C or less. Thus, when the difference between the onset temperature and the endset temperature of the endothermic peak of the porous membrane is 15°C or less, the extrusion pressure of the material for forming the porous membrane is reduced, and the variation in pore size can be smaller.

(3) In (1) or (2), it is preferable that a porosity of the porous membrane is 40% to 90%. The porous membrane having a porosity which is 40% to 90% can suppress an increase in pressure loss while maintaining good capturing performance for fine particles in the porous membrane. The term "porosity" as used herein refers to the percentage of the total volume of pores to the volume of the object, and can be determined by measuring the density of the object in accordance with ASTM-D-792.

(4) In (1) or (2), it is preferable that a mean flow pore size in a pore-size distribution of the porous membrane is 69 nm to 107 nm. The porous membrane can suppress an increase in pressure loss while maintaining good capturing performance for fine particles in the porous membrane, since the mean flow pore size of the pore-size distribution is 69 nm to 107 nm.

(5) In (1) or (2), it is preferable that a pore size ratio in a pore-size distribution of the porous membrane is 17% to 49%. The porous membrane has a pore size ratio in a pore-size distribution which is 17% to 49%, and thus the variation in pore size of the laminate is small, and the accuracy of the filtration treatment can be improved.

(6) A porous membrane laminate including one or a plurality of porous membranes, the one or plurality of porous membranes each being the porous membrane according to (1) to (5). The porous membrane laminate is excellent in accuracy of filtration treatment and suitable as a microfiltration filter because it includes the porous membrane.

(7) In (6), it is preferable that the porous membrane laminate according to another aspect of the present disclosure further includes one or a plurality of support membranes containing polytetrafluoroethylene as a main component and the one or plurality of support membranes are stacked on one surface or both surfaces of each of the one or plurality of porous membranes. The porous membrane laminate comprises one or plurality of porous support membranes, and the membrane is stacked on one surface or both surfaces of the porous membrane, so that the support membrane functions as a protective material for the porous membrane, and thus the porous membrane laminate can improve the mechanical strength and the lifespan of the porous membrane laminate while improving the capturing performance. In addition, the support membrane contains polytetrafluoroethylene as a main component, and thus heat resistance, chemical stability, and the like can be improved.

(8) A method of manufacturing a porous membrane according to another aspect of the present disclosure includes molding a kneaded product of a powder of polytetrafluoroethylene and a liquid lubricant. A difference between a maximum particle size and a minimum particle size in a primary particle size of the polytetrafluoroethylene is 200 nm or less. The primary particle size as used herein is the minimum unit of polytetrafluoroethylene. As the particle size distribution of the primary particles of the polytetrafluoroethylene is broader, the gaps between the PTFE particles are narrower, and the molding auxiliary is less likely to permeate, and the extrusion pressure is lower. However, in the method of manufacturing the porous membrane, a difference between a maximum particle size and a minimum particle size in a primary particle size of the polytetrafluoroethylene is 200 nm or less, and thus the permeability of the liquid lubricant during forming is excellent, and the extrusion pressure can be reduced. The maximum particle size and the minimum particle size can be analyzed by particle size distribution of an SEM image obtained by observing a powder of polytetrafluoroethylene at 50,000 magnifications using image analysis software Image-Pro.

(9) In the above (8), it is preferable that in a melting curve obtained in a first run of differential scanning calorimetry of the polytetrafluoroethylene at a rate of temperature increase of 10°C/min, an amount of heat of fusion in a range of 300°C to 360°C is 60.0 J/g or more. As the particle size distribution of the primary particles of the polytetrafluoroethylene is broader, the variation in the crystallinity inside the particles of the polytetrafluoroethylene is larger, and the width of the endothermic peak of DSC is wider. In the method of manufacturing the porous membrane, in a melting curve obtained in a first run of differential scanning calorimetry of the polytetrafluoroethylene at a rate of temperature increase of 10°C/min, an amount of heat of fusion in a range of 300°C to 360°C is 60.0 J/g or more, whereby the variation of the crystallinity inside the particles of the polytetrafluoroethylene is small, and therefore the permeability of the liquid lubricant during forming is further improved, and the extrusion pressure can be further reduced.

(10) In the above (8), it is preferable that in a melting curve obtained in a first run of differential scanning calorimetry of the polytetrafluoroethylene at a rate of temperature increase of 10°C/min, a difference between an onset temperature and an endset temperature of an endothermic peak in a range of 300°C to 360°C is 20°C or less. In the method of manufacturing the porous membrane, in a melting curve obtained in a first run of differential scanning calorimetry of the polytetrafluoroethylene at a rate of temperature increase of 10°C/min, a difference between an onset temperature and an endset temperature of an endothermic peak in a range of 300°C to 360°C is 20°C or less, whereby the extrusion pressure during the manufacture of the porous membrane is reduced to a favorable range, and the variation in pore size can also be small.

### [Details of Embodiments of Present Disclosure]

Hereinafter, preferred embodiments of the present disclosure will be described with reference to the drawings.

### <Porous Membrane>

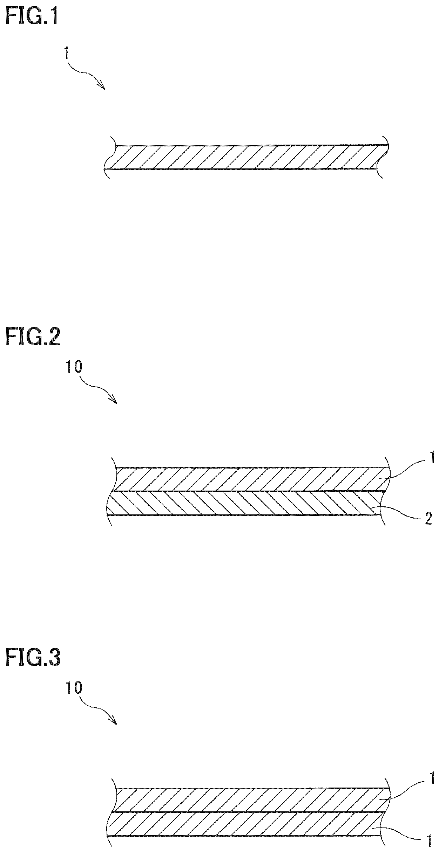

FIG. 1 is a schematic and partial cross-sectional view of the porous membrane according to one embodiment of the present disclosure. A porous membrane 1 is formed of a biaxially-stretching porous membrane containing polytetrafluoroethylene as a main component. The biaxially-stretching porous membrane is made porous by stretching the surface of a sheet containing PTFE as a main component in two directions orthogonal to each other. Porous membrane 1 allows the filtered liquid to permeate in the thickness direction while preventing the permeation of fine impurities.

The PTFE powder preferably has a high molecular weight. By using the PTFE powder having a high molecular weight, growth of fibrous skeleton can be promoted while preventing excessive expansion of pores and cleavage of the sheet during stretching. In addition, the number of nodes in the sheet can be reduced, and the porous membrane in which minute pores are densely formed can be formed.

The PTFE powder preferably has a high molecular weight. By using the PTFE powder having a high molecular weight, growth of fibrous skeleton can be promoted while preventing excessive expansion of pores and cleavage of the membrane during stretching. In addition, the number of nodes in the membrane can be reduced, and the porous membrane in which minute pores are densely formed can be formed.

The lower limit of the number-average molecular weight of the PTFE powder forming porous membrane 1 is preferably 12 million, and more preferably 20 million. On the other hand, the upper limit of the number-average molecular weight of the PTFE powder forming porous membrane 1 is preferably 50 million, and more preferably 40 million. When the number-average molecular weight of the PTFE powder forming porous membrane 1 is less than the lower limit, the pore size of porous membrane 1 increases, and the accuracy of the filtration treatment may decrease. On the other hand, when the number-average molecular weight of the PTFE powder forming porous membrane 1 exceeds the upper limit, there is a possibility that the membrane is difficult to form. It is noted that, the "number-average molecular weight" is determined from the specific gravity of the molded article, but the molecular weight of PTFE varies greatly depending on the measurement method and is difficult to measure accurately, and therefore, the number-average molecular weight may not be in the above range depending on the measurement method.

The melting curve of the first run of porous membrane 1 obtained by differential scanning calorimetry at a rate of temperature increase of 10°C/min has an endothermic peak in the range of 300°C to 360°C, and the difference between the onset temperature and the endset temperature of the endothermic peak is 20°C or less, and more preferably 15°C or less. When the difference between the onset temperature and the endset temperature of the endothermic peak is 20°C or less, the particle size distribution of the PTFE particles is narrow, and the space between the particles is large, so that the liquid lubricant is easily permeated. As a result, the extrusion pressure of the material for forming porous membrane 1 is reduced, and the variation in pore size of formed porous membrane 1 becomes small, so that the accuracy of the filtration treatment can be improved. The difference between the onset temperature and the endset temperature of the endothermic peak is preferably as small as possible, but from the viewpoint of the production method, the difference can be 5°C or more, or 7°C or more. The difference between the onset temperature and the endset temperature of the endothermic peak may be 5°C to 20°C, or 7°C to 15°C. The onset temperature and the endset temperature of the endothermic peak in the range of 300°C to 360°C of the melting curve of the first run of porous membrane 1 can be adjusted by selecting, for example, the molecular weight, the crystallinity, the primary particle size, and the like of PTFE as a raw material.

The lower limit of the amount of heat of fusion (second amount of heat of fusion) of second run obtained by differential scanning calorimetry of porous membrane 1 at a rate of temperature increase of 10°C/min is preferably 10 J/g, and more preferably 14 J/g. On the other hand, the upper limit of the amount of heat of fusion of second run of the PTFE powder forming porous membrane 1 is preferably 23 J/g, and more preferably 18 J/g. When the second amount of heat of fusion of porous membrane 1 is less than the lower limit, the pore size of porous membrane 1 increases, and the accuracy of the filtration treatment may decrease. On the other hand, when the second amount of heat of fusion of porous membrane 1 exceeds the upper limit, it may be difficult to form the membrane.

The lower limit of the average thickness of porous membrane 1 is preferably 2 µm, and more preferably 5 µm. On the other hand, the upper limit of the average thickness of porous membrane 1 is preferably 50 µm, and more preferably 40 µm. When the average thickness is less than the lower limit, the strength of porous membrane 1 may be insufficient. On the other hand, when the average thickness exceeds the upper limit, porous membrane 1 becomes unnecessarily thick, and the pressure loss during the permeation of the filtered liquid may be increased. When the average thickness of porous membrane 1 is within the above range, the strength of porous membrane 1 and the filtration treatment efficiency can be both achieved. "Average thickness" refers to the average value of the thickness of any 10 points and is measured using a standard digital thickness gauge.

The upper limit of the mean flow pore size of the pore-size distribution of porous membrane 1 is preferably 107 nm or less, more preferably 90 nm or less, and still more preferably 73 nm or less. When the upper limit of the mean flow pore size of porous membrane 1 is 107 nm or less, porous membrane 1 has excellent capturing performance for fine particles. On the other hand, the lower limit of the mean flow pore size of the pore-size distribution of porous membrane 1 is preferably 69 nm or more, more preferably 70 nm or more, and still more preferably 71 nm or more. When the mean flow pore size of porous membrane 1 is less than the lower limit, the pressure loss of porous membrane 1 may increase. The mean flow pore size of the pore-size distribution of porous membrane 1 is preferably 69 nm to 107 nm, more preferably 70 nm to 90 nm, and still more preferably 71 nm to 73 nm. The "mean flow pore size" can be calculated from the pore-size distribution measured by a fine pore diameter distribution measuring apparatus (for example, a Perm-Porometer "CFP-1500A" manufactured by PMI Co.) in accordance with ASTM F316-03, JIS-K3832:1990 as described later.

The upper limit of the pore size ratio of the pore-size distribution of porous membrane 1 is preferably 49% or less, more preferably 40% or less, and still more preferably 30% or less. When the upper limit of the pore size ratio of the pore-size distribution of porous membrane 1 is 49% or less, the accuracy of the filtration treatment can be improved. The lower limit of the pore size ratio of the pore-size distribution of porous membrane 1 is preferably 17% or more, more preferably 18% or more, and still more preferably 19% or more. When the lower limit of the pore size ratio of the pore-size distribution of porous membrane 1 is 17% or more, the pressure loss can be increased. The pore size ratio of the pore-size distribution of porous membrane 1 is preferably 17% to 49%, more preferably 18% to 40%, and still more preferably 19% to 30%. The pore size ratio of the pore-size distribution of porous membrane 1 can be determined by the method described below.

The upper limit of the porosity of porous membrane 1 is preferably 90% or less, and more preferably 85% or less. On the other hand, the lower limit of the porosity of porous membrane 1 is preferably 40% or more, and more preferably 50% or more. When the porosity of porous membrane 1 exceeds 90%, the capturing performance for fine particles in porous membrane 1 may be insufficient. On the other hand, when the porosity of porous membrane 1 is less than 40%, the pressure loss of porous membrane 1 may increase. The porosity of porous membrane 1 is preferably 40% to 90%, and more preferably 50% to 85%.

Porous membrane 1 may contain, in addition to PTFE, other fluororesins and additives within a range not impairing the desired effects of the present disclosure.

### [Method of Manufacturing Porous Membrane]

One embodiment of the method of manufacturing the porous membrane will be described. The method of manufacturing the porous membrane includes a step of molding a kneaded product of PTFE powder and a liquid lubricant, and a step of stretching a molded body.

### (Molding Step)

In the forming step, a sheet is formed by extruding a kneaded product of a PTFE powder produced by emulsion polymerization or the like and a liquid lubricant. The raw material PTFE particles are powder formed of fine particles of PTFE. Examples of the PTFE powder include PTFE fine powder which is powder formed of fine particles of PTFE and is produced by emulsion polymerization and PTFE molding powder which is produced by suspension polymerization.

As the liquid lubricant, various lubricants conventionally used in extrusion methods can be used. Examples of the liquid lubricant include petroleum type solvents such as solvent naphtha and white oil, hydrocarbon oils such as undecan, aromatic hydrocarbons such as toluol and xylol, alcohols, ketones, esters, silicone oil, chlorofluorocarbon oil, solutions obtained by dissolving polymers such as polyisobutylene and polyisoprene in these solvents, and waters or aqueous solutions containing surfaceactive agents, and these can be used singly or in combination of two or more kinds. However, from the viewpoint of the uniformity of mixing, it is preferable to use a liquid lubricant of a single component.

The lower limit of the amount of the liquid lubricant mixed with respect to 100 parts by mass of the PTFE powder is preferably 10 parts by mass, and more preferably 16 parts by mass. On the other hand, the upper limit of the mixing amount of the liquid lubricant is preferably 40 parts by mass, and more preferably 25 parts by mass. When the mixing amount of the liquid lubricant is less than 10 parts by mass, extrusion may be difficult. On the other hand, when the mixing amount of the liquid lubricant exceeds 40 parts by mass, there is a concern that compression-molding described below may be difficult.

The material for forming the porous membrane may contain other additives in addition to the liquid lubricant depending on the purpose. Examples of other additives include pigments for coloring, carbon black, graphite, silica powder, glass powder, glass fiber, inorganic fillers such as silicate and carbonate, metal powder, metal oxide powder, and metal sulfide powder for improving wear resistance, preventing cold temperature flow, and facilitating pore formation. In order to assist the formation of the porous structure, a substance which is removed or decomposed by heating, extraction, dissolution or the like, for example, ammonium chloride, sodium chloride, plastic other than PTFE, rubber or the like may be blended in a powder or solution state.

In this step, first, the PTFE powder and the liquid lubricant are mixed, and then the mixture is compression-molded into a block body which is a primary molded body by a compression-molding machine. Next, the block body is extrusion-molded into a sheet form at a temperature of room temperature (for example, 25°C) to 50°C at a rate of, for example, 10 mm/min to 30 mm/min. Further, the sheet form body is rolled by a calender roll or the like to obtain a PTFE sheet having an average thickness of 250 µm to 350 µm.

The difference between the maximum particle size and the minimum particle size in the primary particle size of the polytetrafluoroethylene is 200 nm or less, and preferably 190 nm or less. In the method of manufacturing the porous membrane, the difference between the maximum particle size and the minimum particle size in the primary particle size of the polytetrafluoroethylene is 200 nm or less, and thus the permeability of the liquid lubricant during forming is excellent, and the extrusion pressure can be reduced.

In the method of manufacturing the porous membrane, in the melting curve obtained in the first run of differential scanning calorimetry of the polytetrafluoroethylene at a rate of temperature increase of 10°C/min, an amount of heat of fusion in a range of 300°C to 360°C is preferably 60.0 J/g or more, more preferably 62.0 J/g or more. As the particle size distribution of the primary particles of the polytetrafluoroethylene is broader, the variation in the crystallinity inside the particles of the polytetrafluoroethylene is larger, and the width of the endothermic peak of DSC is wider. In the method of manufacturing the porous membrane, when a melting curve obtained in the first run of differential scanning calorimetry of the polytetrafluoroethylene at a rate of temperature increase of 10°C/min, an amount of heat of fusion in a range of 300°C to 360°C is 60.0 J/g or more, and thus the variation of the crystallinity inside the particles of the polytetrafluoroethylene is small, and therefore the permeability of the liquid lubricant during forming is further improved, and the extrusion pressure can be further reduced.

In the method of manufacturing the porous membrane, it is preferable that in the melting curve obtained in the first run of differential scanning calorimetry of the polytetrafluoroethylene at a rate of temperature increase of 10°C/min, a difference between the onset temperature and the endset temperature of the endothermic peak in a range of 300°C to 360°C is 20°C or less, and more preferably 15°C or less. When the difference between the onset temperature and the endset temperature of the endothermic peak is 20°C or less, the particle size distribution of the PTFE particles is narrow, and the space between the particles is large, so that the liquid lubricant is easily permeated. As a result, the extrusion pressure of the material for forming porous membrane 1 is reduced, and the variation in pore size of formed porous membrane 1 becomes small, so that the accuracy of the filtration treatment can be improved.

The liquid lubricant contained in the PTFE sheet may be removed after the sheet is stretched, but is preferably removed before the sheet is stretched. The liquid lubricant can be removed by heating, extraction, dissolution, or the like. In the case of heating, the liquid lubricant can be removed by rolling the PTFE sheet with a heating roll at 130°C to 220°C, for example. When a liquid lubricant having a relatively high boiling point, such as silicone oil or chlorofluorocarbon oil, is used, the liquid lubricant is preferably removed by extraction.

### (Stretching Step)

In this step, the PTFE sheet which is a molded body is biaxially stretched. By this step, pores are formed, and the porous membrane can be obtained. In this step, the PTFE sheet is sequentially stretched in the longitudinal direction (flow direction) and the lateral direction (width direction) orthogonal to the longitudinal direction to obtain a biaxially-stretching porous membrane.

The stretching of the PTFE sheet is preferably performed at a high temperature in order to densify the porous structure. The lower limit of the temperature during stretching is preferably 60°C, and more preferably 120°C. On the other hand, the upper limit of the temperature during stretching is preferably 300°C, and more preferably 280°C. When the temperature at the time of stretching is lower than 60°C, the pore size may be too large. On the other hand, when the temperature at the time of stretching exceeds 300°C, the pore size may become too small.

Further, the biaxially-stretching porous membrane is preferably subjected to heat fixing after stretching. By performing the heat fixing, the biaxially-stretching porous membrane can be prevented from shrinking, and the porous structure can be more reliably maintained. As a specific method of the heat fixing, for example, a method of fixing both ends of the biaxially-stretching porous membrane and holding the membrane at a temperature of 200°C to 500°C for 0.1 minutes to 20 minutes can be used. It is noted that, when the stretching is performed in multiple stages, heat fixing is preferably performed after each stage.

The structure of the porous membrane is as described above, and thus a repeated description thereof will be omitted.

The porous membrane can be suitably used as a filter or the like requiring high accuracy of filtration treatment because the extrusion pressure during production is reduced and the variation in pore size is small.

### <Porous Membrane Laminate>

Each of porous membrane laminates 10 and 20 includes porous membrane 1 described above. Each of porous membrane laminates 10 and 20 includes one or a plurality of porous membranes 1 (FIG. 2 to FIG. 12).

The porous membrane laminate preferably further includes one or plurality of support membranes and the one or plurality of support membrane are stacked on one surface or both surfaces of each of the one or plurality of porous membranes. This can improve the strength of the porous membrane laminate.

FIG. 2 is a schematic and partial cross-sectional view of the porous membrane laminate according to one embodiment of the present disclosure. Porous membrane laminate 10 shown in FIG. 2 includes porous membrane 1 and a porous support membrane 2 stacked on one surface of porous membrane 1. The expression "porous membrane laminate 10 includes porous membrane 1 and porous support membrane 2 stacked on one surface of porous membrane 1" can be rephrased as "porous membrane laminate 10 includes first porous membrane 1 formed of porous membrane 1 and first support membrane 2 containing polytetrafluoroethylene as a main component, and first porous membrane 1 is disposed on one main surface of first support membrane 2". Porous membrane laminate 10 includes porous support membrane 2 stacked on one surface of porous membrane 1, and porous membrane 1 is supported by support membrane 2, so that the mechanical strength can be improved and the filtration clogging can be suppressed.

Porous support membrane 2 is a porous body, and preferably contains polytetrafluoroethylene as a main component. Support membrane 2 contains polytetrafluoroethylene as a main component, and thus heat resistance, chemical stability, and the like can be improved.

The upper limit of the average thickness of support membrane 2 is preferably 20 µm, and more preferably 15 µm. On the other hand, the lower limit of the average thickness of support membrane 2 is preferably 2 µm, and more preferably 5 µm. When the average thickness of support membrane 2 exceeds 20 µm, the pressure loss of porous membrane laminate 10 may increase. On the other hand, when the average thickness of support membrane 2 is less than 2 µm, the strength of porous membrane laminate 10 may be insufficient.

The lower limit of the mean flow pore size of support membrane 2 is preferably 0.08 µm, and more preferably 0.10 µm. On the other hand, the upper limit of the mean flow pore size is preferably 3.00 µm, and more preferably 1.50 µm. When the mean flow pore size of support membrane 2 is less than 0.08 µm, the pressure loss of porous membrane laminate 10 may increase. On the other hand, when the mean flow pore size of support membrane 2 exceeds 3.00 µm, the strength of support membrane 2 may be insufficient.

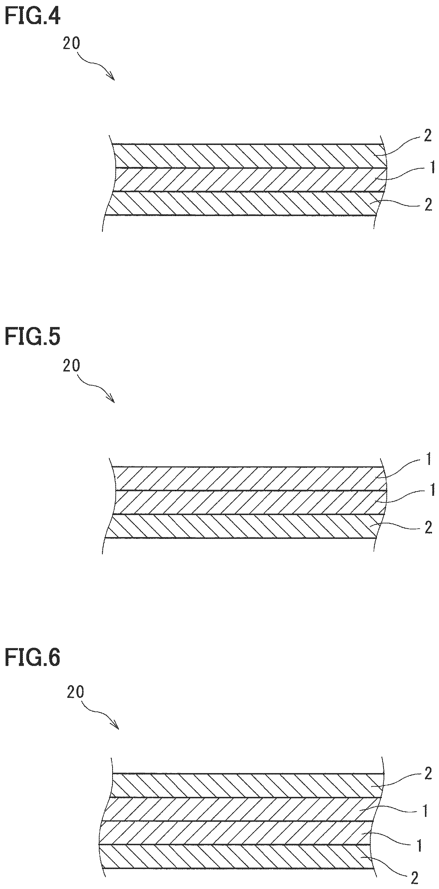

Porous membrane laminate 20 may have a three-layer structure, and for example, may have a total of three layers, which are a pair of support membranes 2 disposed as the outermost layers and one porous membrane 1 disposed between the pair of support membranes 2. Further, porous membrane laminate 20 may have a structure of four or more layers. Examples are shown in FIG. 4 to FIG. 12.

It is preferable that the porous membrane laminate preferably comprises a plurality of porous membranes and a plurality of support membranes, the porous membranes and the support membranes are alternately stacked, and the support membranes are disposed at both ends. In the porous membrane laminate, the porous membrane and the support membrane are alternately stacked, and the support membrane is disposed at both ends, thereby the capturing performance, mechanical strength, and lifespan of the porous membrane laminate can be further improved.

When the porous membrane laminate has, for example, a five-layer structure, it is preferable that the porous membrane laminate includes a plurality of porous membranes and a plurality of support membranes, the porous membranes and the support membranes are alternately stacked, and the support membranes are stacked on both ends. FIG. 6 is a schematic and partial cross-sectional view of a porous membrane laminate according to another embodiment of the present disclosure. Porous membrane laminate 20 shown in FIG. 6 has a five-layer structure in which two layers of porous membranes 1 are stacked between a pair of support membranes 2 in the outermost layer, and support membrane 2 is further stacked between the pair of porous membranes 1. As described above, porous membrane 1 and support membrane 2 are alternately stacked, and support membranes 2 are stacked on both ends, thereby the capturing performance, mechanical strength, and lifespan of porous membrane laminate 20 can be further improved.

For example, as shown in FIG. 3, porous membrane laminate 10 comprises first porous membrane 1 formed of porous membrane 1 and second porous membrane 1 formed of porous membrane 1, and second porous membrane 1 can be disposed on one main surface of first porous membrane 1. Accordingly, the mechanical strength of porous membrane laminate 10 can be improved, and the capturing performance for fine particles (particle-capturing probability in fiber) can be improved. It is noted that, first porous membrane 1 and second porous membrane 1 may have the same structure or different structures.

Further, for example, as shown in FIG. 4, porous membrane laminate 20 comprises first porous membrane 1 formed of porous membrane 1, first support membrane 2 containing polytetrafluoroethylene as a main component, and second support membrane 2 containing polytetrafluoroethylene as a main component, and first porous membrane 1 and second support membrane 2 may be arranged in this order on one main surface of first support membrane 2. This can improve the mechanical strength of porous membrane laminate 20, suppress filtration clogging, and suppress the particle-capturing performance from being lowered due to external damage. Here, first support membrane 2 and second support membrane 2 may have the same structure or different structures.

Further, for example, as shown in FIG. 5, porous membrane laminate 20 comprises first porous membrane 1 formed of porous membrane 1, second porous membrane 1 formed of porous membrane 1, and first support membrane 2 containing polytetrafluoroethylene as a main component, and first porous membrane 1 and second porous membrane 1 may be arranged in this order on one main surface of first support membrane 2. This can improve the mechanical strength of porous membrane laminate 20, suppress filtration clogging, and improve the capturing performance (particle-capturing probability in fiber) of fine particles. It is noted that, first porous membrane 1 and second porous membrane 1 may have the same structure or different structures.

For example, as shown in FIG. 6, porous membrane laminate 20 comprises first porous membrane 1 formed of porous membrane 1, second porous membrane 1 formed of porous membrane 1, first support membrane 2 containing polytetrafluoroethylene as a main component, and second support membrane 2 containing polytetrafluoroethylene as a main component, and first porous membrane 1, second porous membrane 1, and second support membrane 2 may be arranged in this order on one main surface of first support membrane 2. This can improve the mechanical strength of porous membrane laminate 20, suppress filtration clogging, improve the capturing performance (particle-capturing probability in fiber) of fine particles, and suppress the particle-capturing performance from being lowered due to external damage. It is noted that, first porous membrane 1 and second porous membrane 1 may have the same structure or different structures. First support membrane 2 and second support membrane 2 may have the same structure or different structures.

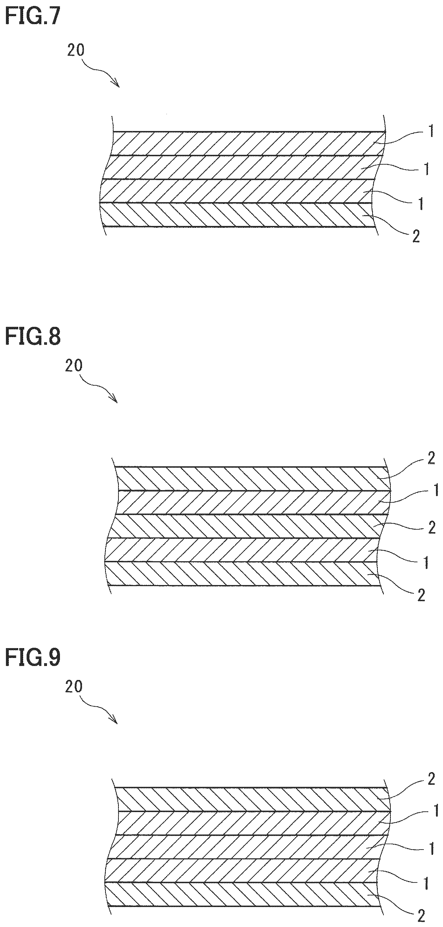

For example, as shown in FIG. 7, porous membrane laminate 20 comprises first porous membrane 1 formed of porous membrane 1, second porous membrane 1 formed of porous membrane 1, third porous membrane 1 formed of porous membrane 1, and first support membrane 2 containing polytetrafluoroethylene as a main component, wherein first porous membrane 1, second porous membrane 1, and third porous membrane 1 are arranged in this order on one main surface of first support membrane 2. This can improve the mechanical strength of porous membrane laminate 20, suppress filtration clogging, and improve the capturing performance (particle-capturing probability in fiber) of fine particles. It is noted that, first porous membrane 1, second porous membrane 1, and third porous membrane 1 may have the same structure or different structures.

For example, as shown in FIG. 8, porous membrane laminate 20 comprises first porous membrane 1 formed of porous membrane 1, second porous membrane 1 formed of porous membrane 1, first support membrane 2 containing polytetrafluoroethylene as a main component, second support membrane 2 containing polytetrafluoroethylene as a main component, and third support membrane 2 containing polytetrafluoroethylene as a main component, wherein first porous membrane 1, second support membrane 2, second porous membrane 1, and third support membrane 2 are arranged in this order on one main surface of first support membrane 2. This can improve the mechanical strength of porous membrane laminate 20, suppress filtration clogging, and suppress the particle-capturing performance from being lowered due to external damage. It is noted that, first porous membrane 1 and second porous membrane 1 may have the same structure or different structures. Further, first support membrane 2, second support membrane 2, and third support membrane 2 may have the same structure or different structures.

For example, as shown in FIG. 9, porous membrane laminate 20 comprises first porous membrane 1 formed of porous membrane 1, second porous membrane 1 formed of porous membrane 1, third porous membrane 1 formed of porous membrane 1, first support membrane 2 containing polytetrafluoroethylene as a main component, and second support membrane 2 containing polytetrafluoroethylene as a main component, and first porous membrane 1, second porous membrane 1, third porous membrane 1, and second support membrane 2 are arranged in this order on one main surface of first support membrane 2. This can improve the mechanical strength of porous membrane laminate 20, suppress filtration clogging, improve the capturing performance (particle-capturing probability in fiber) of fine particles, and suppress the particle-capturing performance from being lowered due to external damage. It is noted that, first porous membrane 1, second porous membrane 1, and third porous membrane 1 may have the same structure or different structures. Further, first support membrane 2 and second support membrane 2 may have the same structure or different structures.

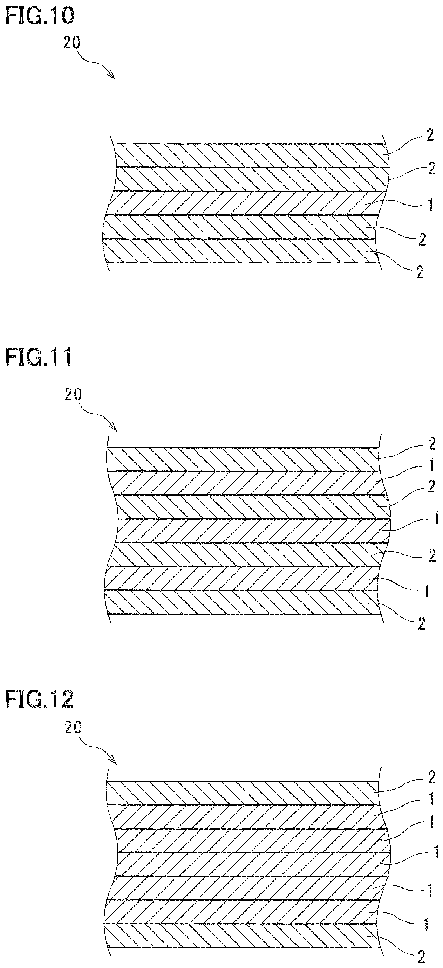

As shown in FIG. 10, porous membrane laminate 20 comprises first porous membrane 1 formed of porous membrane 1, first support membrane 2 containing polytetrafluoroethylene as a main component, second support membrane 2 containing polytetrafluoroethylene as a main component, third support membrane 2 containing polytetrafluoroethylene as a main component, and fourth support membrane 2 containing polytetrafluoroethylene as a main component, and second support membrane 2, first porous membrane 1, third support membrane 2, and fourth support membrane 2 are arranged in this order on one main surface of first support membrane 2. This can improve the mechanical strength of porous membrane laminate 20, suppress filtration clogging, and suppress the particle-capturing performance from being lowered due to external damage. It is noted that, first support membrane 2, second support membrane 2, third support membrane 2, and fourth support membrane 2 may have the same structure or different structures.

As shown in FIG. 11, porous membrane laminate 20 comprises first porous membrane 1 formed of porous membrane 1, second porous membrane 1 formed of porous membrane 1, third porous membrane 1 formed of porous membrane 1, first support membrane 2 containing polytetrafluoroethylene as a main component, second support membrane 2 containing polytetrafluoroethylene as a main component, third support membrane 2 containing polytetrafluoroethylene as a main component, and fourth support membrane 2 containing polytetrafluoroethylene as a main component, and first porous membrane 1, second support membrane 2, second porous membrane 1, third support membrane 2, third porous membrane 1, and fourth support membrane 2 are arranged in this order on one main surface of first support membrane 2. This can improve the mechanical strength of the porous membrane laminate, suppress filtration clogging, and suppress the particle-capturing performance from being lowered by external damage. It is noted that, first porous membrane 1, second porous membrane 1, and third porous membrane 1 may have the same structure or different structures. Further, first support membrane 2, second support membrane 2, third support membrane 2, and fourth support membrane 2 may have the same structure or different structures.

For example, as shown in FIG. 12, porous membrane laminate 20 comprises first porous membrane 1 formed of porous membrane 1, second porous membrane 1 formed of porous membrane 1, third porous membrane 1 formed of porous membrane 1, fourth porous membrane 1 formed of porous membrane 1, fifth porous membrane 1 formed of porous membrane 1, first support membrane 2 containing polytetrafluoroethylene as a main component, and second support membrane 2 containing polytetrafluoroethylene as a main component, and first porous membrane 1, second porous membrane 1, third porous membrane 1, fourth porous membrane 1, fifth porous membrane 1, and second support membrane 2 are arranged in this order on one main surface of first support membrane 2. This can improve the mechanical strength of porous membrane laminate 20, suppress filtration clogging, improve the capturing performance (particle-capturing probability in fiber) of fine particles, and suppress the particle-capturing performance from being lowered due to external damage. It is noted that, first porous membrane 1, second porous membrane 1, third porous membrane 1, fourth porous membrane 1, and fifth porous membrane 1 may have the same structure or different structures. Further, first support membrane 2 and second support membrane 2 may have the same structure or different structures.

### [Method of Manufacturing Porous Membrane Laminate]

An embodiment of the method of manufacturing the porous membrane laminate will be described, in the case where the porous membrane laminate includes for example the porous membrane and the support membrane. The method of manufacturing the porous membrane laminate includes a step of stacking the porous membrane.

### (Stacking Step)

In this step, the porous membrane is stacked on, for example, one surface of the support membrane, and these are heated to form the porous membrane laminate.

Examples of the method of stacking the porous membrane on the support membrane include a method of fusing by heating, and a method of bonding with a glue or an adhesive.

As a method of fusing by heating, specifically, first, the porous membrane is stacked on, for example, one surface of a support membrane, and the laminate is heated to thermally fuse each layer at the boundary to integrate them, thereby obtaining the porous membrane laminate. The lower limit of the heating temperature is preferably 327°C, which is the glass transition point of PTFE, and more preferably 360°C. On the other hand, the upper limit of the heating temperature is preferably 400°C. When the heating temperature is lower than 327°C, the thermal fusion of each layer may be insufficient. On the other hand, when the heating temperature exceeds 400°C, each layer may be deformed. The heating time is preferably 0.5 minutes to 3 minutes.

As the glue or the adhesive in the method of bonding using the glue or the adhesive, a fluororesin or a fluororubber having solvent solubility or thermoplasticity is preferable from the viewpoint of heat resistance, chemical resistance, and the like.

### (Hydrophilization Treatment)

The porous membrane laminate obtained as described above may be subjected to a hydrophilization treatment. The hydrophilization treatment is performed by impregnating the porous membrane laminate with the hydrophilic material and crosslinking the porous membrane laminate. Examples of the hydrophilic material include polyvinyl alcohol (PVA), ethylene-vinyl alcohol copolymer (EVOH), and acrylate resin. Among these, PVA is preferable because it is easily adsorbed in the fiber surface of PTFE and can be uniformly impregnated.

The hydrophilization treatment can be specifically performed, for example, by the following procedure. First, a porous membrane laminate is immersed in isopropyl alcohol (IPA) for 0.25 minutes to 2 minutes, and then immersed in a PVA aqueous solution having a concentration of 0.5 mass% to 0.8 mass% for 5 minutes to 10 minutes. Then, the porous membrane laminate is immersed in pure water for 2 minutes or more and 5 minutes or less, and then crosslinking is performed by adding crosslinking agent or irradiating electron beam. After the crosslinking, the porous membrane laminate is washed with pure water and dried at a temperature of room temperature (25°C) to 80°C, whereby the surface of the porous membrane laminate can be hydrophilized. It is noted that, as the crosslinking agent, for example, one which forms glutaraldehyde crosslinking, terephthalaldehyde crosslinking, or the like is used. Further, the electron beam can be, for example, a 6Mrad beam.

The porous membrane laminate is excellent in accuracy of filtration treatment by including one or a plurality of the porous membranes. In addition, the porous membrane laminate preferably further includes one or a plurality of support membranes containing polytetrafluoroethylene as a main component, and the one or plurality of support membranes are stacked on one surface or both surfaces of each of the one or plurality of porous membranes, so that the support membrane functions as a protective material for the porous membrane, and thus the porous membrane laminate can improve the mechanical strength and the lifespan of the porous membrane laminate while improving the capturing performance. In addition, the support membrane contains polytetrafluoroethylene as a main component, and thus heat resistance, chemical stability, and the like can be improved. Thus, the present invention is suitable for a microfiltration filter for a dispersing medium and a gas used for cleaning, peeling, chemical supply, and the like in semiconductorassociated fields, liquid crystal related fields, and food and medical related fields.

### [Other Embodiments]

The embodiments disclosed herein are to be considered in all respects as illustrative and not restrictive. The scope of the present invention is not limited to the configurations of the above-described embodiments, but is defined by the scope of claims, and is intended to include all modifications within the meaning and scope equivalent to the scope of claims.

### [Appendix 1]

A porous membrane containing polytetrafluoroethylene as a main component,
wherein a melting curve obtained in a first run of differential scanning calorimetry at a rate of temperature increase of 10°C/min has an endothermic peak in a range of 300°C to 360°C, and
a difference between an onset temperature and an endset temperature of the endothermic peak is 20°C or less.

### [Appendix 2]

The porous membrane according to appendix 1, wherein the difference between the onset temperature and the endset temperature of the endothermic peak is 15°C or less.

### [Appendix 3]

The porous membrane according to appendix 1 or 2, wherein a porosity of the porous membrane is 40% to 90%.

### [Appendix 4]

The porous membrane according to appendix 1 or 2, wherein a mean flow pore size in a pore-size distribution of the porous membrane is 69 nm to 107 nm.

### [Appendix 5]

The porous membrane according to appendix 1 or 2, wherein a pore size ratio in a pore-size distribution of the porous membrane is 17% to 49%.

### [Appendix 6]

A porous membrane laminate including one or a plurality of porous membranes, the one or plurality of porous membranes each being the porous membrane according to any one of appendices 1 to 5.

### [Appendix 7]

The porous membrane laminate according to appendix 6, further including one or a plurality of support membranes containing polytetrafluoroethylene as a main component, wherein the one or plurality of support membranes are stacked on one surface or both surfaces of each of the one or plurality of porous membranes.

### [Appendix 8]

A method of manufacturing a porous membrane, the method including molding a kneaded product of a powder of polytetrafluoroethylene and a liquid lubricant,
wherein a difference between a maximum particle size and a minimum particle size in a primary particle size of the polytetrafluoroethylene is 200 nm or less.

### [Appendix 9]

The method of manufacturing a porous membrane according to appendix 8, wherein, in a melting curve obtained in a first run of differential scanning calorimetry of the polytetrafluoroethylene at a rate of temperature increase of 10°C/min, an amount of heat of fusion in a range of 300°C to 360°C is 60.0 J/g or more.

### [Appendix 10]

The method of manufacturing a porous membrane according to appendix 8, wherein, in a melting curve obtained in a first run of differential scanning calorimetry of the polytetrafluoroethylene at a rate of temperature increase of 10°C/min, a difference between an onset temperature and an endset temperature of an endothermic peak in a range of 300°C to 360°C is 20°C or less.

### [Appendix 11]

A porous membrane laminate consisting of a first porous membrane formed of the porous membrane according to any one of appendices 1 to 5 and a second porous membrane formed of the porous membrane according to any one of appendices 1 to 5,
wherein the second porous membrane is disposed on a main surface of the first porous membrane.

### [Appendix 12]

A porous membrane laminate consisting of a first porous membrane formed of the porous membrane according to any one of appendices 1 to 5, a first support membrane containing polytetrafluoroethylene as a main component, and a second support membrane containing polytetrafluoroethylene as a main component,
wherein the first porous membrane and the second support membrane are disposed in this order on a main surface of the first support membrane.

### [Appendix 13]

A porous membrane laminate consisting of a first porous membrane formed of the porous membrane according to any one of appendices 1 to 5, a second porous membrane formed of the porous membrane according to any one of appendices 1 to 5, and a first support membrane containing polytetrafluoroethylene as a main component,
wherein the first porous membrane and the second porous membrane are disposed in this order on a main surface of the first support membrane.

### [Appendix 14]

A porous membrane laminate consisting of a first porous membrane formed of the porous membrane according to any one of appendices 1 to 5, a second porous membrane formed of the porous membrane according to any one of appendices 1 to 5, a first support membrane containing polytetrafluoroethylene as a main component, and a second support membrane containing polytetrafluoroethylene as a main component,
wherein the first porous membrane, the second porous membrane, and the second support membrane are disposed in this order on a main surface of the first support membrane.

### [Appendix 15]

A porous membrane laminate consisting of a first porous membrane formed of the porous membrane according to any one of appendices 1 to 5, a second porous membrane formed of the porous membrane according to any one of appendices 1 to 5, a third porous membrane formed of the porous membrane according to any one of appendices 1 to 5, and a first support membrane containing polytetrafluoroethylene as a main component,
wherein the first porous membrane, the second porous membrane, and the third porous membrane are disposed in this order on a main surface of the first support membrane.

### [Appendix 16]

A porous membrane laminate consisting of a first porous membrane formed of the porous membrane according to any one of appendices 1 to 5, a second porous membrane formed of the porous membrane according to any one of appendices 1 to 5, a first support membrane containing polytetrafluoroethylene as a main component, a second support membrane containing polytetrafluoroethylene as a main component, and a third support membrane containing polytetrafluoroethylene as a main component,
wherein the first porous membrane, the second support membrane, the second porous membrane, and the third support membrane are disposed in this order on a main surface of the first support membrane.

### [Appendix 17]

A porous membrane laminate consisting of a first porous membrane formed of the porous membrane according to any one of appendices 1 to 5, a second porous membrane formed of the porous membrane according to any one of appendices 1 to 5, a third porous membrane formed of the porous membrane according to any one of appendices 1 to 5, a first support membrane containing polytetrafluoroethylene as a main component, and a second support membrane containing polytetrafluoroethylene as a main component,
wherein the first porous membrane, the second porous membrane, the third porous membrane, and the second support membrane are disposed in this order on a main surface of the first support membrane.

### [Appendix 18]

A porous membrane laminate consisting of a first porous membrane formed of the porous membrane according to any one of appendices 1 to 5, a first support membrane containing polytetrafluoroethylene as a main component, a second support membrane containing polytetrafluoroethylene as a main component, a third support membrane containing polytetrafluoroethylene as a main component, and a fourth support membrane containing polytetrafluoroethylene as a main component,
wherein the second support membrane, the first porous membrane, the third support membrane, and the fourth support membrane are disposed in this order on a main surface of the first support membrane.

### [Appendix 19]

A porous membrane laminate consisting of a first porous membrane formed of the porous membrane according to any one of appendices 1 to 5, a second porous membrane formed of the porous membrane according to any one of appendices 1 to 5, a third porous membrane formed of the porous membrane according to any one of appendices 1 to 5, a first support membrane containing polytetrafluoroethylene as a main component, a second support membrane containing polytetrafluoroethylene as a main component, a third support membrane containing polytetrafluoroethylene as a main component, and a fourth support membrane containing polytetrafluoroethylene as a main component,
wherein the first porous membrane, the second support membrane, the second porous membrane, the third support membrane, the third porous membrane, and the fourth support membrane are disposed in this order on a main surface of the first support membrane.

### [Appendix 20]

A porous membrane laminate consisting of a first porous membrane formed of the porous membrane according to any one of appendices 1 to 5, a second porous membrane formed of the porous membrane according to any one of appendices 1 to 5, a third porous membrane formed of the porous membrane according to any one of appendices 1 to 5, a fourth porous membrane formed of the porous membrane according to any one of appendices 1 to 5, a fifth porous membrane formed of the porous membrane according to any one of appendices 1 to 5, a first support membrane containing polytetrafluoroethylene as a main component, and a second support membrane containing polytetrafluoroethylene as a main component,
wherein the first porous membrane, the second porous membrane, the third porous membrane, the fourth porous membrane, the fifth porous membrane, and the second support membrane are disposed in this order on a main surface of the first support membrane.

### [Example]

The present invention will be described in more detail with reference to the following examples, but the present invention is not limited to these examples.

### <Porous Membrane>

### [Test No. 1]

### (Forming Step)

As a raw material powder, PTFE fine powder A (second amount of heat of fusion 15.8 J/g, molecular weight about 28 million) shown in Table 1 was used. PTFE fine powder A used here is a powder obtained by drying and granulating a product (emulsionpolymerized product) formed of PTFE particles (primary particles) produced by emulsion polymerization of tetrafluoroethylene. The specific weight of PTFE fine powder A and the results of differential scanning calorimetry using a differential scanning calorimeter ("DSC-60A" manufactured by Shimadzu Corporation) are shown in Table 1. It is noted that, the differential scanning calorimetry using the differential scanning calorimeter was performed by the above-described method.

The PTFE fine powder and naphtha ("super sol FP-25" manufactured by Idemitsu Petrochemical Co., Ltd., boiling point 50°C to 180°C) as a liquid lubricant were kneaded at a ratio of 100 parts by mass and 18 parts by mass, respectively. Next, the above-mentioned kneaded product was put into a forming machine and compression-molded to obtain a block like molding (primary molded body). Next, the block like molding was continuously extrusion-molded into a sheet form, and then passed through a rolling roller, and further passed through a heating roll (130°C to 220°C) for removing the liquid lubricant, and wound around a roll, thereby forming a PTFE sheet having an average thickness of 320 µm. Next, the film was stretched 4 times in the longitudinal direction (flow direction) at a roll temperature of 250°C to 280°C. Subsequently, both ends of the film in the lateral direction (width direction) after the longitudinal stretching were held by chucks, and the film was stretched 25 times in the lateral direction, which is a direction perpendicular to the flow direction, under an atmosphere of 150°C. As it was, the film was held at 285°C for 0.25 to 1 minute, and heat fixing was performed. By this stretching, a porous membrane of Test No. 1 having a thickness of 7 µm was obtained.

The stretched sheet was sintered for 1.5 minutes by passing through a heating furnace at 360°C and a porous membrane of Test No. 1 was obtained.

### [Test No. 2]

A porous membrane of Test No. 2 was obtained by the same process as for the porous membrane of Test No. 1, except that PTFE fine powder B (second amount of heat of fusion 17.0 J/g, molecular weight about 23 million) having the specific weight and the differential scanning calorimetry results shown in Table 1 was used as the raw material powder, and that naphtha as a liquid lubricant was kneaded at a ratio of 16 parts by mass with respect to 100 parts by mass of the PTFE fine powder, and that the longitudinal stretching was performed at a stretching ratio of 4 times and the lateral stretching was performed at a stretching ratio of 21 times.

### [Test No. 3]

A porous membrane of Test No. 3 was obtained by the same process as for the porous membrane of No. 1, except that PTFE fine powder C (second amount of heat of fusion 16.8 J/g, molecular weight about 22 million) having the specific weight and differential scanning calorimetry results shown in Table 1 was used as the raw material powder, and that naphtha as a liquid lubricant was kneaded at a ratio of 16 parts by mass with respect to 100 parts by mass of the PTFE fine powder, and that the longitudinal stretching was performed at a stretching ratio of 6 times and the lateral stretching was performed at a stretching ratio of 25 times.

### <Evaluation>

### [Extrusion Pressure]

The measurement was performed by the following method using a capillary rheometer ("RH7" manufactured by Malvern Instruments Ltd.). Isoparaffin-based hydrocarbon (Idemitsu super sol FP-25) as a liquid lubricant was kneaded at a ratio of 20 parts by mass with respect to 100 parts by mass of the PTFE fine powders A, B and C. Next, the kneaded product was filled in a barrel part having a diameter of 15 mm, and extruded at a rate of 100 mm/min at a measuring temperature of 50°C using a capillary dice. The capillary dice having an inflow angle of 90°, and the capillary die having a length of 0.25 mm and an inside diameter of 2.0 mm were used.

### [Mean Flow Pore Size and Pore Size Ratio]

First, the pore-size distribution of the porous membranes of Test No. 1 to Test No. 3 was measured with a fine pore size distribution analyzer (Perm-Porometer "CFP-1500A" manufactured by PMI) using propylene, 1,1,2,3,3,3-hexahydrofluoric acid oxide ("GALWICK" manufactured by PMI) having a surface tension of 15.9 mN/m as a reagent in accordance with ASTM F316-03, JIS-K3832:1990. Then, the maximum pore size [nm] and the mean flow pore size [nm] were obtained from the pore-size distribution, and the pore size ratio [%] was calculated from the following equation. The larger the pore size ratio, the larger the variation in the pore size of the porous membrane, which means that the accuracy of the filtration treatment of the porous membrane is reduced. Pore size ratio [%] = {(maximum pore size - mean flow pore size)/mean flow pore size} × 100

### [Porosity]

The porosity was determined as the percentage of the total volume of pores to the volume of each porous membrane by measuring the density of the porous membranes of Test No. 1 to Test No. 3 in accordance with ASTM-D-792. Specifically, the porosity was calculated by the following procedure. First, the porous membranes of Test No. 1 to Test No. 3 were punched into circular shape having a diameter of Φ60mm, and the masses [g] and thicknesses [mm] of the samples were measured. The mass was measured using a mass balance and the thickness was measured using a digital thickness gauge. Then, the porosity [%] was calculated from the following equation. Porosity [%] = [1 - {mass/ (area of one surface of sample × thickness × specific gravity 2.17)}] × 100

Table 1 shows the results of evaluation of the extrusion pressure, pore size ratio, and porosity of the porous membranes of Test No. 1 to Test No. 3.

### [Table 1]

**Table 1**

| Test Number | Raw Material PTFE Powder | | | | | | | | | | | Porous Membrane | | | | | |
|---|---|---|---|---|---|---|---|---|---|---|---|---|---|---|---|---|---|
| | Raw Material Species | Specific Gravity | Thermal Analysis of Raw Material (DSC) | | | | Primary Particle Size | | | | | Thermal Analysis (DSC) | Average Thickness [µm] | Extrusion Pressure [MPa] | Pore-Size Distribution | | Porosity [%] |
| | | | First Run (300 to 360°C) | | Second Run (300 to 360°C) | | Average Particle Size [nm] | Standard Deviation [nm] | Minimum Particle Size [nm] | Maximum Particle Size [nm] | Difference between Maximum Particle Size and Minimum Particle Size [nm] | First Run (300 to 360°C) | | | Mean Flow Pore Size [nm] | Pore Size Ratio [%] | |
| | | | Peak | First Amount of Heat of Fusion [J/g] | Peak | Second Amount of Heat of Fusion [J/g] | | | | | | Peak | | | | | |
| | | | Difference between Endset and Onset [°C] | | Difference between Endset and Onset [°C] | | | | | | | Difference between Endset and Onset [°C] | | | | | |
| 1 | PTFE Fine Powder A | 2.14 | 10.1 | 63.3 | 13.0 | 15.8 | 191 | 40 | 111 | 310 | 198 | 13.0 | 7 | 10.6 | 69.0 | 24.6 | 57 |
| 2 | PTFE Fine Powder B | 2.16 | 8.5 | 65.7 | 8.3 | 17.0 | 198 | 44 | 100 | 280 | 180 | 11.5 | 5 | 9.8 | 106.2 | 17.7 | 64 |
| 3 | PTFE Fine Powder C | 2.14 | 20.3 | 56.9 | 9.8 | 16.8 | 186 | 55 | 68 | 312 | 244 | 28.3 | 7 | 13.5 | 75.1 | 48.2 | 60 |

As shown in Table 1, the porous membranes of Test No. 1 and Test No. 2, in which the difference between the onset temperature and the endset temperature of the endothermic peak having a range of 300°C to 360°C in the melting curve of the first run obtained by differential scanning calorimetry was 20°C or less, had lower extrusion pressure and pore size ratio than the porous membrane of Test No. 3. This shows that the porous membranes of Test No. 1 and Test No. 2 have a small variation in pore size of the porous membrane and have a highly accurate filtration treatment performance. In particular, in the porous membrane of Test No. 1, despite the amount of heat of fusion of second run of PTFE fine powder A as a raw material is low, and PTFE fine powder A has the highest molecular weight, the difference between the onset temperature and the endset temperature of an endothermic peak in a range of 300°C to 360°C of the melting curve obtained in the first run is 20°C or less, whereby the extrusion pressure during the manufacture of the porous membrane is reduced to a favorable range, and the variation in pore size can also be small. In addition, it is considered that Test No. 1 and Test No. 2 used, as a raw material, a PTFE fine powder in which the difference between the maximum particle size and the minimum particle size in the primary particle size was 200 nm or less and the amount of heat of fusion in the range of 300°C to 360°C of the melting curve of the first run obtained by the differential scanning calorimetry at a rate of temperature increase of 10°C/min was 60.0 J/g or more, and thus the permeability of the liquid lubricant during forming was further improved and the extrusion pressure was further reduced.

From the above results, the porous membrane can be suitably used as a filter or the like requiring highly accurate filtration treatment performance because the extrusion pressure during production is reduced and the variation in pore size is small.

### REFERENCE SIGNS LIST

1 porous membrane, 2 support membrane, 10, 20 porous membrane laminate.

## Claims

1. A porous membrane comprising polytetrafluoroethylene as a main component,
wherein a melting curve obtained in a first run of differential scanning calorimetry at a rate of temperature increase of 10°C/min has an endothermic peak in a range of 300°C to 360°C, and
a difference between an onset temperature and an endset temperature of the endothermic peak is 20°C or less.

2. The porous membrane according to claim 1, wherein the difference between the onset temperature and the endset temperature of the endothermic peak is 15°C or less.

3. The porous membrane according to claim 1 or 2, wherein a porosity of the porous membrane is 40% to 90%.

4. The porous membrane according to claim 1 or 2, wherein a mean flow pore size in a pore-size distribution of the porous membrane is 69 nm to 107 nm.

5. The porous membrane according to claim 1 or 2, wherein a pore size ratio in a pore-size distribution of the porous membrane is 17% to 49%.

6. A porous membrane laminate comprising one or a plurality of porous membranes, the one or plurality of porous membranes each being the porous membrane according to any one of claims 1 to 5.

7. The porous membrane laminate according to claim 6, further comprising one or a plurality of support membranes containing polytetrafluoroethylene as a main component, wherein the one or plurality of support membranes are stacked on one surface or both surfaces of each of the one or plurality of porous membranes.

8. A method of manufacturing a porous membrane, the method comprising molding a kneaded product of a powder of polytetrafluoroethylene and a liquid lubricant,
wherein a difference between a maximum particle size and a minimum particle size in a primary particle size of the polytetrafluoroethylene is 200 nm or less.

9. The method of manufacturing a porous membrane according to claim 8, wherein, in a melting curve obtained in a first run of differential scanning calorimetry of the polytetrafluoroethylene at a rate of temperature increase of 10°C/min, an amount of heat of fusion in a range of 300°C to 360°C is 60.0 J/g or more.

10. The method of manufacturing a porous membrane according to claim 8, wherein, in a melting curve obtained in a first run of differential scanning calorimetry of the polytetrafluoroethylene at a rate of temperature increase of 10°C/min, a difference between an onset temperature and an endset temperature of an endothermic peak in a range of 300°C to 360°C is 20°C or less.
